# EUROPEAN PATENT APPLICATION

(11) **EP 1 411 003 A1**
(43) Date of publication of application: **21.04.2004**
(21) Application number: 03002371.7
(22) Date of filing: 04.02.2003
(51) Int. Cl.: B65D 81/26, B29C 51/02

(54) **Tray for containing foodstuffs, and process and system for manufacturing such tray**

(30) Priority: 16.10.2002 IT TO20020895
(71) Applicant: MAGIC PACK S.R.L., 26030 Gadesco Pieve Delmona (CR) (IT)
(72) Inventor: Biasio, Florio, 26030 Gadesco Pirve Delmona (CR) (IT)
(74) Representative: Garavelli, Paolo

(57) **Abstract**

A tray (1) for containing foodstuffs and a process and a system for manufacturing such tray are disclosed. The tray (1) comprises: a lower layer (3) for external support and an upper layer (7) as internal bottom made of a liquid-tight material, that form transverse edges (11) and side edges (17); and an absorbing layer (5) arranged between the lower and upper layers (3, 7), wherein the upper layer (7) is equipped with holes (9) along its whole extension, comprising transverse edges (11) and side edges (17) of the tray (1), and wherein the absorbing layer (5) is arranged on the whole extension of the tray (1).

## Description

The present invention refers to a tray for containing foodstuffs, and to a process and the related system for manufacturing such tray.

Trays of this type are known in the art and are realised in various sizes and configurations, and are all adapted to contain foodstuffs which, once having been placed inside the tray, are generally coated with plastic films for packaging, storage and displaying of contained foodstuffs.

A problem with some foodstuffs that release liquids during their storage is the absorption of such liquids, so that they do not remain in sight on the tray bottom, with various problems, both from the health and from the aesthetic point of view. The liquid absorption problem has been solved in the art by document GB-A-1168925, that provides for a tray equipped with a basic layer, overlapped by an absorbing layer in its central part, in turn overlapped by a bottom drilled layer, always in the central part of the tray. Various improvements have been made in time to this type of tray, one of which is the one disclosed in document EP-A-0182139 that provides for the realisation of the absorbing layer and the holes on the longitudinal sides of the tray.

These solutions however are not wholly satisfactory under the current foodstuff transport and storage conditions, and have the following problems:
- a uniform absorption on all tray sides is not guaranteed, such absorption being instead necessary since, during tray transport and handling, the tray, with the product inside it, is often tilted on all its sides;
- the two external front layers of the trays are sealed together through heat-sealing on the sides where the absorbing layer is not present; instead, on the longitudinal sides where such layer is present, sealing is not performed and the tray is open and subjected to detachments of the various layers.

Object of the present invention is solving the above prior-art problems, by providing a tray that allows a uniform and widespreaded absorption on all its surface in contact with the foodstuff, bottom and four sides included.

A further object of the present invention is providing a tray of the above-mentioned type that is sturdy, has all its layers that are mutually and tightly connected on all four sides, and can be easily realised with reduced costs.

A further object of the present invention is providing a process for manufacturing the above-mentioned tray, in a completely automated and safe way.

Another object of the present invention is providing a system for manufacturing the above-described tray, using the above-mentioned process, that is easily realised with reduced costs.

The above and other objects and advantages of the invention, as will appear from the following description, are obtained by a tray, a process and a system as claimed in Claims 1, 6 and 11, respectively. Preferred embodiments and non-trivial variations of the present invention are claimed in the dependent Claims.

The present invention will be better described by some preferred embodiments thereof, given as a non-limiting example, with reference to the enclosed drawings, in which:
- Figure 1 is a top view of an embodiment of the tray according to the present invention;
- Figure 2 is a sectional view of the tray performed along line II-II in Fig. 1;
- Figure 3 is a sectional view of the tray performed along line III-III in Fig. 1.
- Figure 4 is a side schematic view of the main components of an embodiment of the system of the present invention;
- Figure 5 is a front view of the first station of the system of Fig. 4; and
- Figure 6 is a front view of the second station of the system of Fig. 4.

With reference to the Figures, preferred embodiments of the tray and the system of the present invention are shown and described. It will be readily obvious that numerous variations and modifications (for example related to shape, sizes, various colours and parts with equivalent functionalities) can be made to the described tray and system without departing from the scope of the invention as appears from the enclosed Claims.

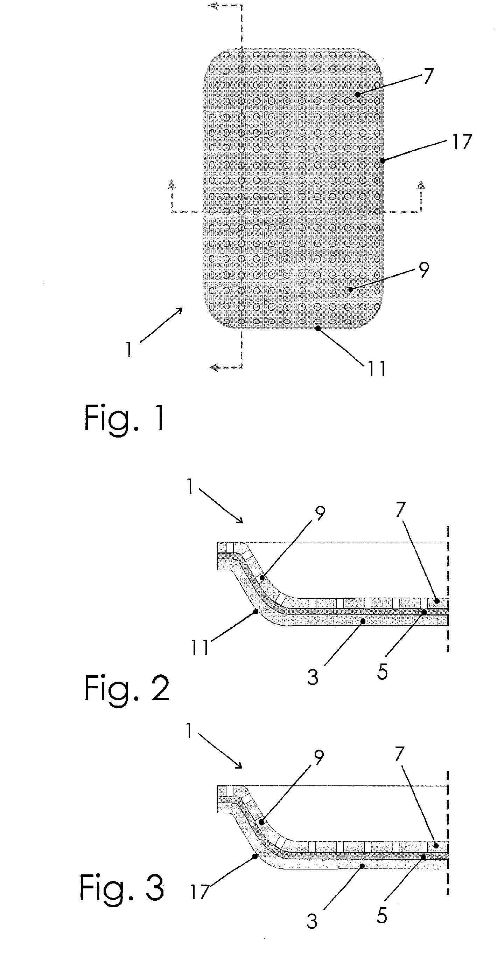

According to Fig. 1 to 3, the tray 1 for containing foodstuffs of the invention comprises first of all a lower layer 3 for external support and an upper layer 7 as internal bottom, both made of liquid-tight material (for example polyurethane or equivalent foamed plastic material): such layers 3, 7 form transverse edges 11 and side edges 17 raised on the whole perimeter of the tray 1. In a known way, the upper layer 7 is equipped with holes 9 next to the bottom and the transverse edges 11 of the tray 1.

The tray 1 of the invention therefore comprises at least one (but also two or more) absorbing layer 5 arranged between the lower layer 3 and the upper layer 7: this absorbing layer 5 is adapted to absorb liquid coming out of said foodstuffs that passes through the holes 9 obtained in the upper layer 7.

In an innovative way with respect to prior art trays, the tray 1 of the invention provides that the upper layer 7 as internal bottom is equipped with holes 9 along its whole extension (guaranteeing a complete chance for the passage of liquids), and consequently both the transverse edges 11 and the side edges 17 of the tray 1, once finished, are equipped with holes 9.

Moreover, the absorbing layers are arranged on the whole extension of the tray 1, and consequently both the transverse edges 11 and the side edges 17 of the tray 1 are adapted to absorb liquid coming out of the foodstuffs, thereby guaranteeing a complete and uniform absorption everywhere, namely on the whole extension of the tray 1.

In particular, the absorbing layers 5 are joined to the lower layer 3 and the upper layer 7 through mutual glueing, or through heat and heat-sealing.

Moreover, in order to make the absorption widespreaded and uniform, the holes 9 are realised in a plurality of rows that are mutually parallel both longitudinally, and transversally with respect to the tray 1 (see Fig. 1).

The above-described tray 1 is manufactured in a completely automated way through an inventive process that comprises the steps of:
- realising through extrusion a band of material for the lower layer 3;
- realising through extrusion a band of material for the upper layer 7, in which such band for the upper layer 7 has the same width as that of the band for the lower layer 3;
- punching the band of material for the upper layer 7 uniformly on its whole surface;
- providing a band of material for every absorbing layer 5, in which the band for every absorbing layer 5 has the same width of the bands for the lower layer 3 and the upper layer 7;
- joining the band for the lower layer 3, the bands for the absorbing layer 5 and the band for the upper layer 7 along their whole width; and
- thermoforming the bands for forming the final shape of the tray 1.

In particular, the step of joining the bands occurs through glueing of the band for the lower layer 3 and the band for the upper layer 7 to the bands for the absorbing layer 5, or, alternatively, through heat-sealing of the band for the lower layer 3 and of the band for the upper layer 7 to the bands for the absorbing layer 5.

Still particularly, the step of punching the band for the upper layer 7 occurs through blanking, or through punching with tools equipped with pinholes.

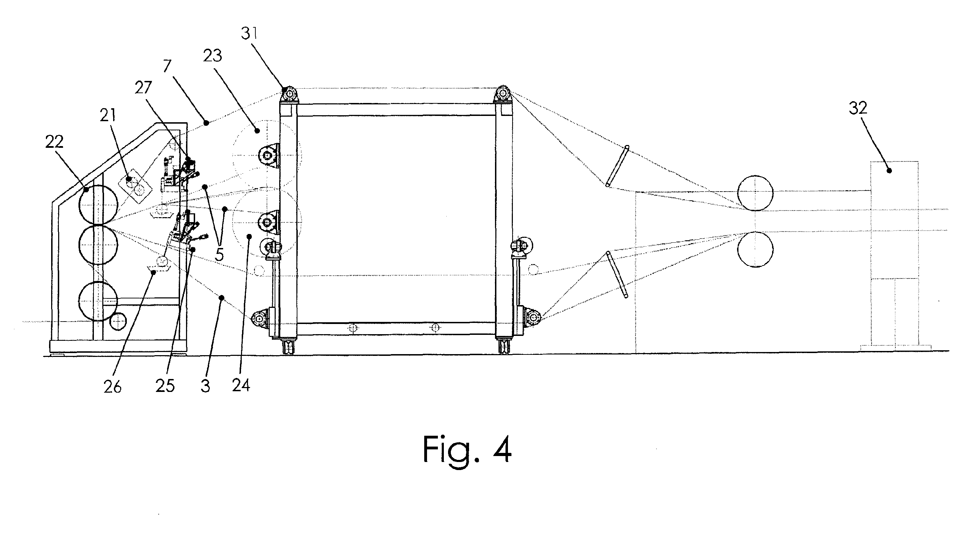

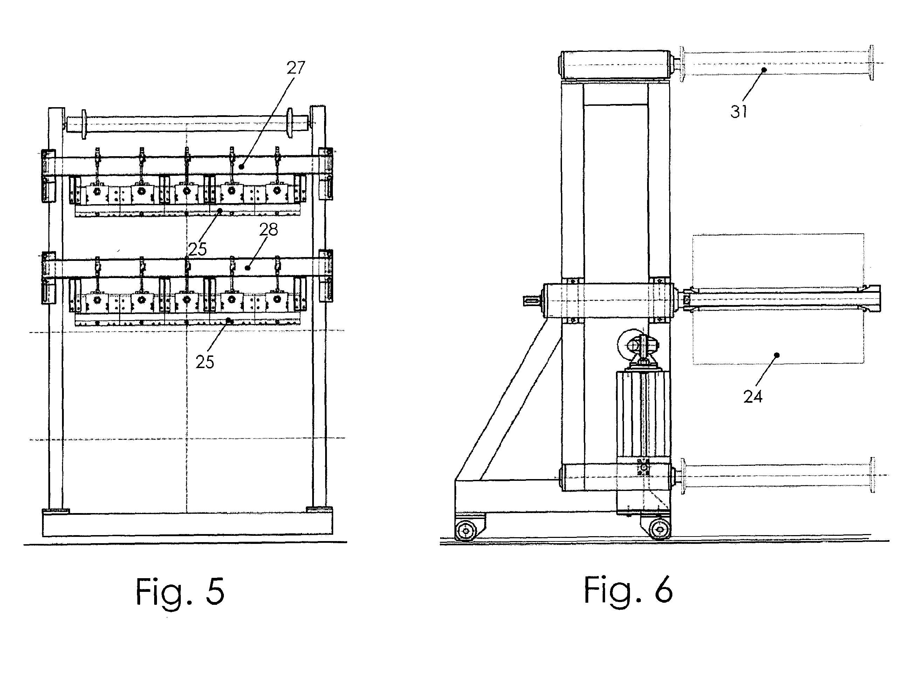

The invention finally provides for a system for manufacturing the above-described tray 1 using the mentioned automated process. In a preferred embodiment shown in Fig. 4 to 6, the system comprises:
- extruder means 32 for extruding a band of material for the lower layer 3;
- extruder means 32 for extruding a band of material for the upper layer 7, so that the band for the upper layer 7 has the same width as that of the band for the lower layer 3;
- means 21 for punching the band of material for the upper layer 7 uniformly on its whole surface;
- means 24 for providing a band of material for every absorbing layer 5, in which the band for every absorbing layer 5 has the same width of the bands for the lower layer 3 and the upper layer 7;
- means 22, 25 for joining the band for the lower layer 3, the bands for the absorbing layer 5 and the band for the upper layer 7 along their whole width; and
- means (not shown, for example a common thermoforming machine) for thermoforming the bands for forming the final shape of the tray 1.

In particular, the means for joining the bands comprise a glueing machine 25 that glues the band for the lower layer 3 and the band for the upper layer 7 to the bands for the absorbing layer 5: the bands are supplied to the machine in the final configuration to realise the tray 1, and the glueing machine applies glue onto the absorbing layer 5 supplied by the means 24 (and also 23, that is a spare reel of absorbing layer 5) and produces as output a composite layer comprising lower layer 3, absorbing layers 5 and upper layer 7 that are mutually overlapped and glued, and are supplied by the means 22 (that are commonly a dragging roller) towards the means for thermoforming the layers into their final shape of a tray.

Alternatively, the means for joining the bands comprise a heat-sealing machine (not shown) that heat-seals the band for the lower layer 3 and the band for the upper layer 7 to the bands for the absorbing layer 5: the bands are supplied to the machine in the final configuration for realising the tray 1, and the heat-sealing machine produces as output a composite layer comprising lower layer 3, absorbing layers 5 and upper layer 7 that are mutually overlapped and heat-sealed.

Finally, the means 21 for punching the band for the upper layer 7 can be composed of a blanking machine that realises holes 9 with relatively big sizes, or of a machine equipped with a punching roller with pinholes and with a counter-roller adapted to press the band against the punching roller.

Fig. 4 to 6 also show a collecting tank 26 for the excess glue, an upper support 27 and a lower support 28 for the glueing machine 25, and transmission rollers 31 for the layers 3, 7 prepared by the extruding means 32 and delivered (through common operating steps) to the means 22.

## Claims

1. Tray (1) for containing foodstuffs comprising:
- a lower layer (3) for external support and an upper layer (7) as internal bottom made of liquid-tight material, said layers (3, 7) forming transverse edges (11) and side edges (17) raised on the whole perimeter of said tray (1), said upper layer (7) being equipped with holes (9) next to the bottom and the transverse edges (11) of said tray (1);
- at least one absorbing layer (5) arranged between said lower layer (3) and said upper layer (7), said at least one absorbing layer (5) being adapted to absorb liquid coming out of said foodstuffs;
**characterised in that**:
- said upper layer (7) as internal bottom is equipped with holes (9) along its whole extension, and consequently both said transverse edges (11) and said side edges (17) of said tray (1) are equipped with holes (9); and
- said at least one absorbing layer (5) is arranged on the whole extension of said tray (1), and consequently both said transverse edges (11) and said side edges (17) of said tray (1) are adapted to absorb liquid coming out of said foodstuffs.

2. Tray (1) according to Claim 1, **characterised in that** it comprises two absorbing layers (5) arranged between said lower layer (3) and said upper layer (7) .

3. Tray (1) according to Claim 1 or 2, **characterised in that** said absorbing layers (5) are joined to said lower layer (3) and said upper layer (7) through glueing.

4. Tray (1) according to Claim 1 or 2, **characterised in that** said absorbing layers (5) are joined to said lower layer (3) and said upper layer (7) through heating.

5. Tray (1) according to Claim 1, **characterised in that** said holes (9) are realised in a plurality of rows that are mutually parallel both longitudinally, and transversally with respect to the tray (1).

6. Process for automatically manufacturing a tray (1) according to Claim 1, comprising the steps of:
- realising through extrusion a band of material for the lower layer (3);
- realising through extrusion a band of material for the upper layer (7), said band for the upper layer (7) having the same width as that of the band for the lower layer (3);
- punching said band of material for the upper layer (7) uniformly on its whole surface;
- providing a band of material for every absorbing layer (5), said band for every absorbing layer (5) having the same width of said bands for the lower layer (3) and the upper layer (7);
- joining the band for the lower layer (3), the bands for the absorbing layer (5) and the band for the upper layer (7) along their whole width; and
- thermoforming said bands for forming the final shape of said tray (1).

7. Process according to Claim 6, **characterised in that** said step of joining said bands occurs through glueing of said band for the lower layer (3) and said band for the upper layer (7) to said bands for the absorbing layer (5).

8. Process according to Claim 6, **characterised in that** said step of joining said bands occurs through heat-sealing of said band for the lower layer (3) and of said band for the upper layer (7) to said bands for the absorbing layer (5).

9. Process according to Claim 6, **characterised in that** said step of punching said band for the upper layer (7) occurs through blanking.

10. Process according to Claim 6, **characterised in that** said step of punching said band for the upper layer (7) occurs through punching with tools equipped with pinholes.

11. System for manufacturing a tray (1) according to Claim 1 using the process according to Claim 6, said system comprising:
- extruder means (32) for extruding a band of material for the lower layer (3);
- extruder means (32) for extruding a band of material for the upper layer (7), said band for the upper layer (7) having the same width as that of the band for the lower layer (3);
- means (21) for punching said band of material for the upper layer (7) uniformly on its whole surface;
- means (24) for providing a band of material for every absorbing layer (5), said band for every absorbing layer (5) having the same width of said bands for the lower layer (3) and the upper layer (7);
- means (22, 25) for joining the band for the lower layer (3), the bands for the absorbing layer (5) and the band for the upper layer (7) along their whole width; and
- means for thermoforming said bands for forming the final shape of said tray (1).

12. System according to Claim 11, **characterised in that** said means (22, 25) for joining said bands comprise a glueing machine (25) that glues said band for the lower layer (3) and said band for the upper layer (7) to said bands for the absorbing layer (5), said bands being supplied to said machine in the final configuration to realise the tray (1), said glueing machine applying glue onto said bands for the absorbing layer (5) supplied by said means (24) and producing as output a composite layer comprising lower layer (3), absorbing layers (5) and upper layer (7) that are mutually overlapped and glued by passing through said means (22).

13. System according to Claim 11, **characterised in that** said means (22, 25) for joining said bands comprise a heat-sealing machine that heat-seals said band for the lower layer (3) and said band for the upper layer (7) to said bands for the absorbing layer (5), said bands being supplied to said machine in the final configuration for realising the tray (1), said heat-sealing machine producing as output a composite layer comprising lower layer (3), absorbing layers (5) and upper layer (7) that are mutually overlapped and heat-sealed by passing through said means (22).

14. System according to Claim 12 or 13, **characterised in that** said means (22) for joining said bands are composed of a pair of dragging rollers.

15. System according to Claim 11, **characterised in that** it further comprises a spare reel (23) for said bands of absorbing layer (5).

16. System according to Claim 11, **characterised in that** said means (21) for punching said band for the upper layer (7) are composed of a blanking machine that realises holes (9) with relatively big sizes.

17. System according to Claim 11, **characterised in that** said means (21) for punching said band for the upper layer (7) are composed of a machine equipped with a punching roller with pinholes and with a counter-roller adapted to press said band against said punching roller.
